# EUROPÄISCHE PATENTANMELDUNG

(11) **EP 1 322 074 A1**
(43) Veröffentlichungstag der Anmeldung: **25.06.2003**
(21) Anmeldenummer: 01130473.0
(22) Anmeldetag: 20.12.2001
(51) Int. Cl.: H04L 12/56, H04L 29/06

(54) **Verfahren für eine ausgewogene Aufnahme von Datenpaketen in eine Warteschlange**

(71) Anmelder: SIEMENS AKTIENGESELLSCHAFT, 80333 München (DE)
(72) Erfinder: Charzinski, Joachim, Dr., 85764 Oberschleissheim (DE); Köhler, Stefan, 97218 Gerbrunn (DE); Schwab, Christian, 97980 Bad Mergentheim (DE)

(57) **Zusammenfassung**

Die Erfindung betrifft ein Verfahren zur Regelung der Aufnahme von Datenpaketen (DP) in eine Warteschlange (FIFO). Bei dem erfindungsgemäßen Verfahren wird ein ankommendes Datenpakets (DP) in die Warteschlange (FIFO) aufgenommen, wenn ein Grenzwert (u) für den Füllstand (x) der Warteschlange (FIFO) unterschritten wird. Im Falle eines ankommenden Datenpaketes (DP) bei überschrittenem Grenzwert (u) für den Füllstand (x) wird zumindest eine von dem Datenpaket (DP) umfasste Information (i) bestimmt und das Datenpaket (DP) mit einer Wahrscheinlichkeit, die als Funktion einer quantitativen Eigenschaft (nᵢ) der Datenpakete (DP) innerhalb der Warteschlange, die dieselbe Information (i) umfassen, berechnet wird, unmittelbar in die Warteschlange (FIFO) aufgenommen. Durch das erfindungsgemäße Verfahren ist eine ausgewogenere bzw. fairere Aufnahme von Datenpaketen in die Warteschlange als bei herkömmlichen gewährleistet.

Das Verfahren ermöglicht eine faire Behandlung von Paketen gemäß dem TCP-Protokoll, die in einer RED-(Random Early Detection)- Warteschlange zwischengespeichert sind. Vorzugsweise wird die Behandlung eines Paketes von dessen Zugehörigkeit zu einer Verbindung und der Anzahl der zu diesen Verbindung gehörender, bereits zwischengespeicherter Pakete bestimmt.

## Beschreibung

Die Erfindung betrifft ein Verfahren zur Regelung der Aufnahmen von Datenpaketen in eine Warteschlange, insbesondere im Sinne eines nach der Herkunft der Datenpakete ausgewogenen Zugriffes auf ein paketvermitteltes Netz.

Bei dem Transport und der Übermittlung von Daten werden häufig Datenpakete aus verschiedenen Quellen zusammengeführt, beispielsweise um über eine physikalische Leitung oder zu einem Empfänger übertragen zu werden. Für die Vermittlungstechnik stellt sich dabei das Problem, dass bei einer hohen Auslastung oder einer Überlastung des Transportmediums eine ausgewogene Behandlung der Datenpaketen nach ihrer Herkunft gewährleistet werden sollte.

Vielfach werden zur Pufferung einer Überlast Warteschlangen eingerichtet, in die ankommende Datenpakete entsprechend ihrer Reihenfolge aufgenommen werden. Man spricht hier häufig von einem FIFO (first in first out) oder einem FCFS (first come first served) Modus. Wenn die Warteschlange überzulaufen droht, müssen zusätzliche Strategien zur Überlastbehandlung, wie z.B. der Verwurf von Datenpaketen, zur Anwendung kommen, um die Effizienz des Ablaufs der Übertragung von Datenpaketen nicht zu gefährden. Dabei sollte eine ausgewogene Behandlung der Datenpakete erfolgen.

Ein Beispiel für eine Konstellation, bei der Warteschlangen zur Laststeuerung zum Einsatz kommen, ist der Übergang zwischen verschiedenen physikalischen Netzen. Solche Übergänge kommen beispielsweise bei der Datenübertragung über das Internet vor. Bei dem Internet können auf der Grundlage der verbindungslosen Paketvermittlung mittels des IP Protokolls verschiedene, über eine Netzverbindung (Link) verbundene physikalischen Netze für die Übertragung von Daten benutzt werden. Auf der Transportebene kann diese Datenübertragung im Rahmen einer Verbindung mittels des TCP (transmission control protocol) Protokolls oder verbindungslos mit Hilfe des UDP (user datagram protocol) Portokolls erfolgen.

Für Warteschlangen, die beim Übergang zwischen physikalischen Netzen im Rahmen von Datenübertragung mit Hilfe des IP Protokolls Pufferfunktionen erfüllen, wurden verschiedene Überlast-Abwehr Strategien, die eine ausgewogene bzw. faire Behandlung der ankommenden Datenpakete gewährleisten sollen, entwickelt.

Bei den sogenannten Drop-Tail-Warteschlangen wird bei jedem neu ankommenden Datenpaket geprüft, ob für dieses in der Warteschlange noch genügend Speicherplatz vorhanden ist. Je nach Ergebnis der Überprüfung der in der Warteschlange noch vorhandenen Speicherkapazität wird das Datenpaket dort eingereiht und weiterverarbeitet oder verworfen. Diese Strategie hat den Nachteil, dass einzelne Verbindungen wesentlich stärker von dem Verlust von Datenpaketen betroffen sein können als andere. In der Regel führt diese Strategie bei dem Vergleich von zwei Verbindungen, deren Daten über die Warteschlange laufen bei derjenigen, die früher mit der Datenübertragung begonnen hat, zu einem Vorteil und folglich bei gleicher Sendefrequenz zu einer höheren Übertragungsrate. Zudem ergibt sich vielfach ein ungewünschter Oszillationseffekt, der dadurch bedingt ist, dass mehrere Verbindungen gleichzeitig ihre Senderate reduzieren. Ein derartiger Oszillationseffekt kann beispielsweise bei Verwendung des TCP Protokolls (transmission control protocls) auf Grund des beim TCP Protokoll vorgesehenen Feedback-Mechanismusses entstehen. Der Netzübergang ist dann vorübergehend nicht ausgelastet, obwohl die TCP-Quellen genügend Daten zu senden hätten.

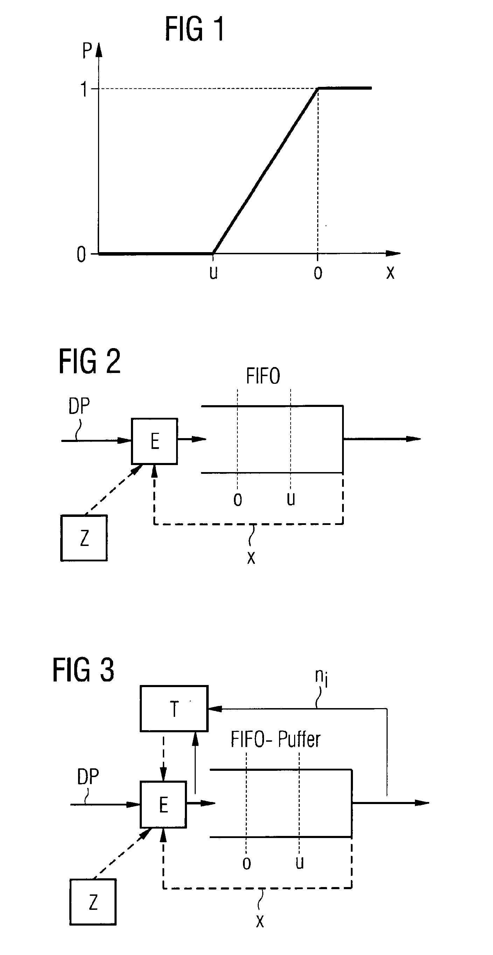

RED (random early detection) Warteschlangen vermeiden einige Nachteile der Drop-Tail-Warteschlangen, indem schon bei Überschreiten eines Grenzwertes bzw. einer Schwelle für dem Füllstand der Warteschlange Datenpakete verworfen werden. Der Verwurf von Datenpaketen oberhalb der Schwelle wird mit einer Wahrscheinlichkeit durchgeführt, die abhängig von dem Füllstand ist und bei vollständig gefüllter Warteschlange den Wert 1 erreicht. In Figur 1 ist der Verlauf der Verwurfswahrscheinlichkeit p für eine RED Warteschlange in Abhängigkeit des Füllstandes x der Warteschlange gezeigt. Zwischen der Schwelle u und der Obergrenze o steigt der Wert der Wahrscheinlichkeit von 0 auf 1. Die Obergrenze o wird beispielsweise gleich der Gesamtkapazität der Warteschlange gewählt. Ein anderer als ein linearer Verlauf des Anstiegs der Wahrscheinlichkeit ist denkbar. Im allgemeinen wird jedoch eine Funktion gewählt werden, die zu einem monoton wachsenden Verlauf der Kurve für die Verwurfswahrscheinlichkeit p in Abhängigkeit des Füllstandes x führt.

RED Warteschlangen drosseln die Rate, mit der Datenpakete in die Warteschlange eingereiht werden, in Abhängigkeit des Warteschlangenfüllstandes. Alternativ zum Verwurf von Datenpaketen können mit der Wahrscheinlichkeit p Datenpakete markiert werden, z.B. durch Setzen eines ECN (explicit congestion notifiaction) Bits. Im Rahmen des ECN Verfahrens kann dann durch eine Rückkopplungsschleife für die TCP-Senderate der Verwurf von Datenpaketen reduziert bzw. verhindert werden.

Die Erfindung hat zur Aufgabe, ein hinsichtlich der Ausgewogenheit verbessertes Verfahren für Warteschlangen zur Behandlung von Überlast anzugeben.

Die Aufgabe wird durch ein Verfahren entsprechend Anspruch 1 gelöst.

Das erfindungsgemäße Verfahren regelt die Aufnahme von Datenpaketen in eine Warteschlange bzw. einen Datenpuffer. Dabei wird ein ankommendes Datenpaket in die Warteschlange aufgenommen, wenn ein Grenzwert bzw. Schwellenwert für die den Füllstand der Warteschlange unterschritten wird. Wenn der Grenzwert für den Füllstand überschritten ist, wird das Datenpaket nur mit einer gewissen Wahrscheinlichkeit unmittelbar in die Warteschlange aufgenommen. Für die Bestimmung der Wahrscheinlichkeit unterscheidet man Datenpakete nach Maßgabe einer bestimmten quantitativen Eigenschaft. Im folgenden werden die Datenpakete, die sich nicht hinsichtlich dieser quantitativen Eigenschaft unterscheiden, als eine Gruppe von Datenpaketen bezeichnet. Die Gruppenzugehörigkeit bzw. die quantitative Eigenschaft bestimmt sich aus einer von den Datenpaketen umfassten Information. Bei der Bestimmung der Wahrscheinlichkeit, mit der ein Datenpaket unmittelbar in die Warteschlange aufgenommen wird, geht die quantitative Eigenschaft der Datenpakete derselben Gruppe, die sich bereits in der Warteschlange befinden, ein. Bei dieser quantitativen Eigenschaft kann es sich beispielsweise um die Anzahl der Datenpakete derselben Gruppe, die sich in der Warteschlange befinden, handeln oder man nimmt das Datenvolumen, z.B. in Byte, der Datenpakete einer Gruppe innerhalb der Warteschlange. Bei der Bestimmung des Datenvolumens kann der Header der Datenpakete eingehen.

Die Extraktion der Information, nach der die Datenpakete verschiedenen Gruppen zugeordnet werden, und die Bestimmung ihrer Gruppenzugehörigkeit kann für alle ankommenden Datenpakete unabhängig von dem Füllstand vorgenommen werden. Auf diese Weise können die Werte der quantitative Eigenschaft der Gruppen von Datenpaketen festgehalten und bei Änderungen des Warteschlangeninhalts angepasst werden. Wenn bei Überschreiten des Grenzwertes für den Füllstand Überlastmaßnahmen eingeleitet werden, stehen dann die Werte der quantitativen Eigenschaft der verschiedenen Gruppen von Datenpaketen entsprechend dem Warteschlangeninhalt zur Verfügung, und müssen nicht eigens bestimmt werden.

Die Information, nach der die Datenpakete gruppiert werden, kann beispielsweise eine Adressinformation sein. Bei einem IP-Netz können zur Einordnung der Datenpakete in Gruppen die IP-Adresse und die Port-Nummer vom Sender und vom Empfänger zur Anwendung kommen. Eine Gruppierung entsprechend der Verbindung, die beispielsweise durch gleiche IP-Adressen und Port-Nummern gegeben ist, ist eine weitere Möglichkeit. Datenpakete, die nicht unmittelbar in die Warteschlange aufgenommen werden, werden beispielsweise verworfen oder markiert sowie in die Warteschlange aufgenommen, sofern die Warteschlange nicht voll ist. Wie bei dem RED-Verfahren kann durch die Markierung von Datenpaketen, z.B. mit Hilfe eines ECN-Bits, durch eine Rückkopplung zum Sender die Senderate datenverkehrsabhängig gesteuert werden.

Durch das erfindungsgemäße Verfahren ist eine ausgewogenere bzw. fairere Aufnahme von Datenpaketen in die Warteschlange gewährleistet. Die Behandlung der unterschiedlichen Gruppen von Datenpaketen ist nicht von zufälligen Begebenheiten abhängig, wie z.B. der zeitlichen Reihenfolge, mit der die Verbindungen, zu der das Datenpaket gehört, hergestellt wurden. Die Wahrscheinlichkeit kann auch für verschiedene Gruppen von Datenpaketen unterschiedlich gewählt werden, was einer Priorisierung entspricht. Insbesondere kann eine Warteschlange mit erfindungsgemäßer Überlastabwehrstrategie für einen nach der Herkunft der Datenpakete ausgewogenen Zugriff auf ein paketvermitteltes physikalisches Netz zum Einsatz kommen. Durch geeignete Wahl der Wahrscheinlichkeit lassen sich Verbindungen mit hohen Qualitätsanforderungen (quality of service), wie sie beispielsweise bei Sprachübertragung über das Internet notwendig sind, hinsichtlich des Zugriffs auf das paketvermittelte physikalische Netz priorisieren.

Die quantitative Eigenschaft der Datenpakete innerhalb der Warteschlange, nach der sich die Gruppenzugehörigkeit bestimmt, das heißt z.B. die Zugehörigkeit zu einer Verbindung oder die Gleichheit einer Adressinformation kann in einer Tabelle dynamisch festgehalten werden. Beim Einreihen eines Datenpaketes in die Warteschlange wird dann der für die Gruppe eingetragene Wert der quantitativen Eigenschaft entsprechend erhöht und bei Verlassen eines Datenpaketes entsprechend erniedrigt. Wenn es sich bei der quantitativen Eigenschaft um die Anzahl der Datenpakete handelt, wird also diese Anzahl um 1 inkrementiert bzw. dekrementiert. Dagegen wird, wenn es sich bei dem Wert der quantitativen Eigenschaft um die Anzahl der Bytes handelt, diese Anzahl erhöht bzw. erniedrigt. Der Eintrag zur quantitativen Eigenschaft einer Gruppe von Datenpaketen kann gelöscht werden, wenn alle Datenpakete der Gruppe die Warteschlange verlassen haben. Zur Löschung von Einträgen kann eine Zeitschranke bzw. ein Timer verwendet werden, der gestartet wird, wenn das letzte Paket einer Gruppe die Warteschlange verlassen hat. Wenn während der Laufzeit des Timers kein neues Datenpaket der Gruppe in die Warteschlange aufgenommen wird, wird nach Ablauf des Timers der Eintrag gelöscht. Die Zeitschranke bzw. die Laufzeit des Timers kann so gewählt werden, dass bei Gruppen von Datenpaketen die entsprechend der Verbindung zusammengefasst sind, im Regelfall Einträge von Gruppen gelöscht werden, bei denen die zugehörige Verbindung beendet wurde. Alternativ können die Einträge zu den Gruppen von Datenpaketen zyklisch auf Einträge überprüft werden, für die keine Datenpakete sich mehr in der Warteschlange befinden. Solche Einträge werden dann gelöscht.

Für die Wahrscheinlichkeit p, mit der Datenpakete in die Warteschlange eingereiht werden, lassen sich verschiedene funktionale Abhängigkeiten ansetzen. Eine einfache Funktion, die angewandt werden kann, ist p = Nᵢ/C für einen Warteschlangenfüllstand x der größer als der Grenzwert u für den Füllstand ist. Mit der Wahrscheinlichkeit p wird dann das Datenpaket verworfen bzw. markiert. C ist eine Skalierungskonstante die die Aggressivität der Warteschlange beim Verwerfen bzw. Markieren von Paketen bestimmt. Nᵢ ist proportional zur quantitativen Eigenschaft der Gruppe von Datenpaketen, das heißt proportional zur Anzahl der Datenpakete der Gruppe in der Warteschlange bzw. zu deren Datenvolumen. Die Skalierungskonstante C kann beispielsweise gleich der maximalen Kapazität der Warteschlange gesetzt werden oder sich als Summe der Nᵢ berechnen. Die Skalierungskonstante C kann auch gleich den Füllstand der Warteschlange gesetzt werden. Im allgemeinen ist es sinnvoll, eine Wahrscheinlichkeit zu wählen, die auch explizite funktionale Abhängigkeit von dem Füllstand x aufweist. Die Wahrscheinlichkeit sollte zudem auf einen maximalen Wert von 1 begrenzt werden, wenn der funktionale Zusammenhang größere Werte als 1 zulassen würde. Das wäre bei der Formel p = Nᵢ/C der Fall, wenn Nᵢ > C möglich ist. Die Behandlung von Datenpaketen nach Maßgabe einer Wahrscheinlichkeit kann mit Hilfe von Zufallszahlen oder Pseudozufallszahlen vorgenommen werden, wobei die Zufallszahlen mit Hilfe eines Zufallsgenerator bedarfsabhängig erzeugt werden oder tabelliert zur Verfügung stehen.

Bei Vorhandensein mehrerer Warteschlangen kann ein Zufallsgenerator zentral für alle Warteschlangen verwendet bzw. eine Tabelle für alle Warteschlangen geführt werden. Entsprechend kann bei mehreren Warteschlangen die Verwaltung der Einträge mit der quantitativen Eigenschaft je nach Datenpaketgruppe zentralisiert werden.

Die Erfindung wird im Folgenden im Rahmen eines Ausführungsbeispieles näher erläutert. Es zeigen:
- Fig. 1: Verwurfswahrscheinlichkeit als Funktion des Warteschlangenfüllstandes bei einem RED-Verfahren
- Fig. 2: schematische Darstellung einer Warteschlange mit RED Zugangsverwaltung
- Fig. 3: schematische Darstellung einer Warteschlange mit erfindungsgemäßer Zugangsverwaltung
- Fig. 4: schematische Darstellung des Inhaltes einer Tabelle mit Einträgen für das erfindungsgemäße Verfahren
- Fig. 5: Simulationsergebnis: Drop-Tail Warteschlange und erfindungsgemäße Warteschlage im Vergleich hinsichtlich der Abhängigkeit des Durchsatzes von der Anzahl gleichzeitiger TCP-Verbindungen auf einem Link
- Fig. 6: Simulationsergebnis: Abhängigkeit des Durchsatzes von der Quellennummer bei unterschiedlichen Rundlaufzeiten bei Drop-Tail Warteschlange und erfindungsgemäßer Warteschlage

Dabei bezeichnen gleiche Bezugszeichen gleiche Elemente.

Figur 2 zeigt das Prinzip einer RED Zugangsverwaltung und Figur 3 das einer erfindungsgemäßen Zugangsverwaltung. Die in Figur 2 und Figur 3 dargestellten Warteschlangen können beispielsweise - evtl. in mehrfacher Ausfertigung - in einem Router oder einem Internet-Zugangsvorrichtung (z.B. IAD (integrated access device, xDSL (digital subscriber line)), aber auch als Teil einer Betriebssystem- oder Treibersoftware zur Anwendung kommen.

Bei Ankunft eines Datenpaketes DP bei der RED Warteschlange findet eine Entscheidung statt, ob dieses Datenpaket DP in die Warteschlange FIFO (FIFO: für first in first out) eingereiht oder verworfen wird. Diese Entscheidung wird mit Hilfe einer Entscheidungslogik E durchgeführt. Datenpakete DP werden mit einer bestimmten Wahrscheinlichkeit verworfen, die eine Funktion des Warteschlangenfüllstandes x ist. Die Entscheidungslogik E erhält von der Warteschlange FIFO den Warteschlangenfüllstand x als Parameter geliefert. Zudem wird die Entscheidungslogik E mit Hilfe eines Zufallszahlengenerators Z mit Zufallszahlen gefüttert, um mit einer vom Warteschlangenfüllstand x abhängigen Wahrscheinlichkeit eine Entscheidung über die Behandlung des Datenpaketes DP zu fällen. Mit Hilfe des Warteschlangenfüllstandes x wird die Wahrscheinlichkeit berechnet, mit der ein ankommendes Datenpaket DP verworfen werden soll. Der Zufallsgenerator Z liefert eine Zufallszahl, die in Verbindung mit der berechneten Wahrscheinlichkeit das Verwurfskriterium bildet. Die Verwurfswahrscheinlichkeit ist 0 unterhalb einer bestimmten Schwelle u und 1 oberhalb der Obergrenze o, bei der die Warteschlange vollständig gefüllt ist. Dieser Sachverhalt ist auch in Figur 1 dargestellt. Die Zufallszahlen können bei Bedarf erzeugt werden. Alternativ hat der Entscheider E Zugriff auf vorausberechnete, evtl. tabelliert Zufallszahlen. Statt Zufallszahlen können auch sogenannte Pseudozufallszahlen verwendet werden. Im Gegensatz zu "echten" Zufallszahlen werden Pseudozufallszahlen mit Hilfe eines deterministischen Verfahrens erzeugt. Pseudozufallszahlen erfüllen gewisse statistische Eigenschaften von "echten" Zufallszahlen, die für wahrscheinlichkeitsabhängige Entscheidungen wesentlich sind.

Figur 3 zeigt schematisch das erfindungsgemäße Verfahren. Ähnlich einer RED Zugangsverwaltung wird mit einer Entscheidungslogik E gearbeitet, die mit dem Warteschlangenfüllstand x und Zufallszahlen gefüttert wird. Bei der Entscheidung über den Verwurf eines Datenpaketes DP geht erfindungsgemäß zusätzlich eine quantitative Eigenschaft nᵢ der entsprechenden Gruppe von Paketen innerhalb der Warteschlange ein. Die quantitative Eigenschaft nᵢ ist in der Tabelle T gespeichert.

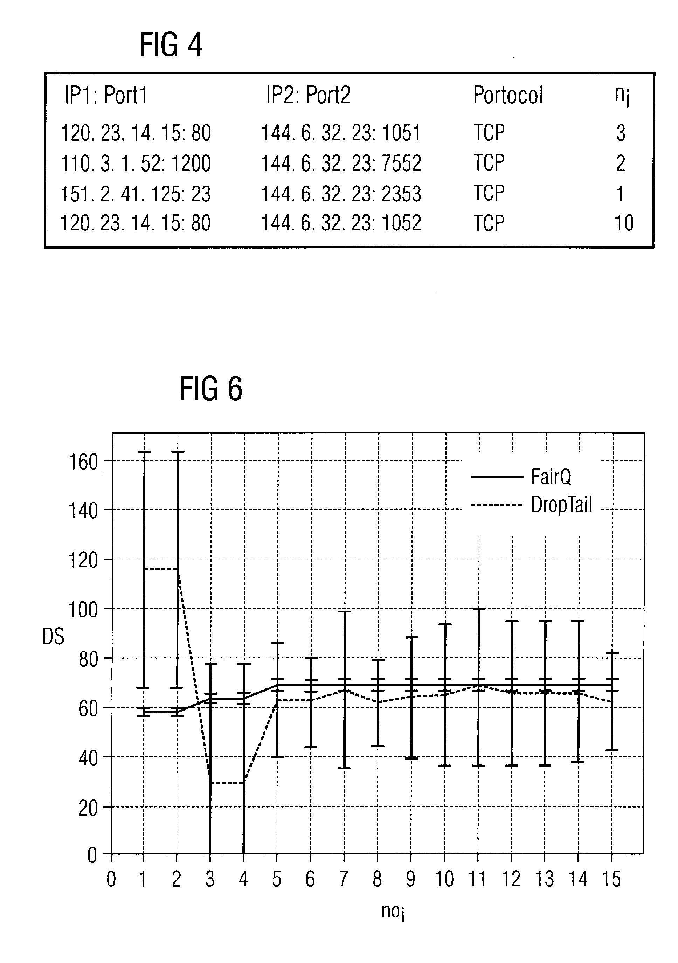

In Figur 4 ist beispielhaft ein Inhalt solch einer Tabelle T gezeigt. Die Information i, nach der gemäß Figur 4 Gruppen von Datenpaketen unterschieden werden, ist die zugehörige Verbindung. Eine Verbindung ist gegeben durch die IP- und Port-Adressen von der sendenden und empfangenden Anwendung. Die quantitative Eigenschaft nᵢ, die für die Entscheidung über den Verwurf eines Datenpaketes verwendet wird, ist die Anzahl der Datenpakete innerhalb der Warteschlange, die einer bestimmten Verbindung zugeordnet sind. In der ersten Spalte der Tabelle von Figur 4 ist die IP-Adresse und, mit Doppelpunkt abgetrennt, die Port-Adresse der sendenden Anwendung angegeben. Die zweite Spalte enthält die entsprechende inrormation für die empfangende Anwendung. In der dritten Spalte ist das Protokoll der Transportebene aufgeführt. Beim Anwendungsbeispiel wird für alle Verbindungen das TCP-Protokoll verwendet. In der vierten und letzten Spalte ist die Anzahl der Datenpakete innerhalb der warteschelange der durch die ersten drei Einträge der entsprechenden Zeile gegebenen Verbindung aufgeführt. Es sind in der Tabelle vier Verbindungen angegeben, mit drei, zwei, eins und zehn Datenpaketen in der Warteschlange. Bei dem erfindungsgemäßen Verfahren (Figur 3) wird bei einem ankommenden Datenpaket DP von der Entscheidungslogik E die zugehörige Verbindung bestimmt. Von der Tabelle T erhält die Entscheidungslogik E die Anzahl nᵢ der Datenpakete der zugehörigen Verbindung, die sich bereits in der Warteschlange befinden. Bei der Berechnung der Wahrscheinlichkeit geht nun außer dem Warteschlangen-Füllstand x auch noch die Anzahl nᵢ der zu der selben Verbindung zugehörigen Datenpakete, die sich in der Warteschlange befinden, ein.

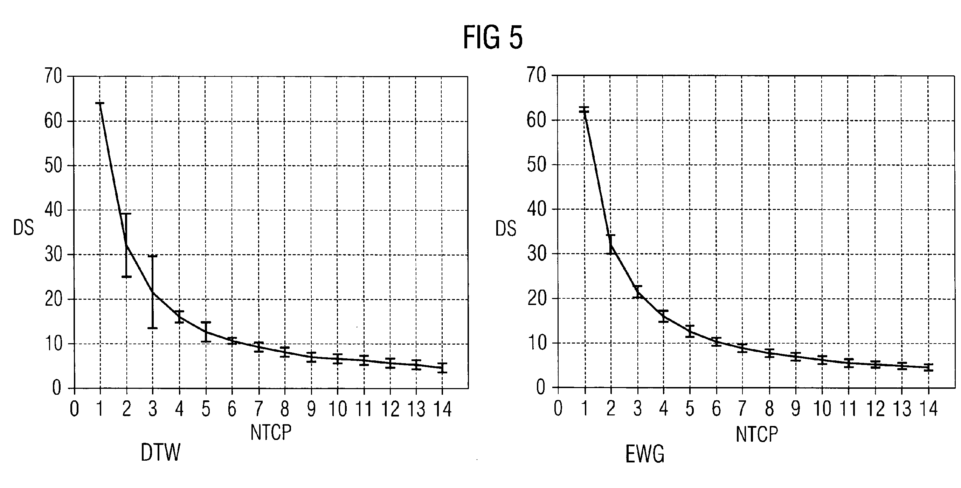

In den Figuren 5 und 6 ist anhand von Simulationsergebnissen gezeigt, dass das erfindungsgemäße Verfahren zu einer ausgewogeneren bzw. faireren Behandlung von ankommenden Datenpaketen führt. In Figur 5 ist ein Simulationsergebnis gezeigt, bei dem für eine Drop-Tail Warteschlange DTW und eine erfindungsgemäße Warteschlange EGW die Abhängigkeit des Durchsatzes DS von der Anzahl NTCP gleichzeitiger TCP-Verbindungen aufgetragen ist. Die Varianz des Durchsatzes DS, die durch Fehlerbalken kenntlich gemacht ist, ist bei der erfindungsgemäßen Warteschlange EGW im Vergleich zur Drop-Tail Warteschlange signifikant verringert, dass heißt die unterschiedlichen, zum Mittelwert beitragenden Verbindungen erreichen einen ausgeglicheneren Durchsatz.

In Figur 6 ist ein weiteres Simulationsergebnis dargestellt. Für eine Drop-Tail Warteschlange (durchbrochene Linie) und eine erfindungsgemäße Warteschlange (durchgezogene Linie) ist die Abhängigkeit des Durchsatzes DS von der Quellennummer bzw. der Verbindungsnummer noi bei unterschiedlichem verbindungsabhängigen Paketlaufzeiten dargestellt. Mit Hilfe von Fehlerbalken ist die Varianz angegeben. Die erfindungsgemäße Warteschlange erzielt hier einen wesentlich ausgeglicheneren Durchsatz DP bei erheblich geringerer Varianz. Der Durchsatz DP hängt bei dem erfindungsgemäßen Verfahren deutlich weniger stark von der Position der sendenden Anwendung im Netz ab, als bei einer herkömmlichen Drop-Tail Warteschlange.

Der Erfindungsgegenstand ist nicht auf den in dem Ausführungsbeispiel beschriebenen Fall von TCP-Verbindungen beschränkt. Beispielsweise kann mit erfindungsgemäßen Warteschlangen bei Datenströmen, die mit Hilfe der UDP (User Datagram Protocol) übertragen werden, ein ausgeglicheneren Durchsatz als mit Drop-Tail Warteschlangen erzielt werden.

## Patentansprüche

1. Verfahren zur Regelung der Aufnahme von Datenpaketen (DP) in eine Warteschlange (FIFO), insbesondere im Sinne eines nach der Herkunft der Datenpakete (DP) ausgewogenen Zugriff auf ein paketvermitteltes Netz, bei dem
- ein ankommendes Datenpaket (DP) in die Warteschlange (FIFO) aufgenommen wird, wenn ein Grenzwert (u) für den Füllstand (x) der Warteschlange (FIFO) unterschritten wird,
- dass im Falle eines ankommenden Datenpaketes (DP) bei überschrittenen Grenzwert (u) für den Füllstand (x)
-- zumindest eine von dem Datenpaket (DP) umfasste Information (i) bestimmt wird,
-- das Datenpaket (DP) mit einer Wahrscheinlichkeit, die als Funktion einer quantitativen Eigenschaft (nᵢ) der dieselbe Information umfassenden Datenpakete (DP) innerhalb der Warteschlange berechnet wird, unmittelbar in die Warteschlange (FIFO) aufgenommen wird, und
-- anderenfalls bezüglich des Datenpakets (DP) eine weitere Maßnahme ergriffen wird.

2. Verfahren nach Anspruch 1,
**dadurch gekennzeichnet,**
**dass** die Information (i) die Verbindung identifiziert oder durch eine Adressinformation gegeben ist.

3. Verfahren nach einem der vorhergehenden Ansprüche,
**dadurch gekennzeichnet,**
**dass** als quantitative Eigenschaft (nᵢ) der Datenpakete (DP) innerhalb der Warteschlange (FIFO), die dieselbe Information (i) umfassen, deren Anzahl oder deren Datenvolumen bestimmt wird.

4. Verfahren nach einem der vorhergehenden Ansprüche,
**dadurch gekennzeichnet,**
**dass** Datenpakete (DP), die nicht unmittelbar in die Warteschlange (FIFO) aufgenommen werden, verworfen werden.

5. Verfahren nach einem der Ansprüche 1 bis 4,
**dadurch gekennzeichnet,**
**dass** Datenpakete (DP), die nicht unmittelbar in die Warteschlange (FIFO) aufgenommen werden, markiert und in die Warteschlange (FIFO) aufgenommen werden, sofern die Warteschlange (FIFO) nicht voll ist.

6. Verfahren nach einem der vorhergehenden Ansprüche,
**dadurch gekennzeichnet,**
- **dass** in einer Tabelle (T) der Wert der quantitativen Eigenschaft (nᵢ) der Datenpakete (DP) innerhalb der Warteschlange (FIFO), die dieselbe Information (i) umfassen, dynamisch festgehalten wird, und
- **dass** bei Einreihen eines Datenpaketes (DP) in die Warteschlange (FIFO) der Wert der quantitativen Eigenschaft (nᵢ) entsprechend erhöht, und bei Verlassen eines Datenpaketes (DP) entsprechend erniedrigt wird.

7. Verfahren nach Anspruch 6,
**dadurch gekennzeichnet,**
- **dass** der Eintrag zur quantitativen Eigenschaft (nᵢ) der Datenpakete (DP) innerhalb der Warteschlange (FIFO), die dieselbe Information (i) umfassen, gelöscht wird, wenn alle Datenpakete (DP), die diese Information (i) umfassen, die Warteschlange (FIFO) verlassen haben.

8. Verfahren nach einem der vorhergehenden Ansprüche,
**dadurch gekennzeichnet,**
- **dass** sich die Wahrscheinlichkeit durch Division der quantitativen Eigenschaft (nᵢ) durch eine Skalierungskonstante errechnet.

9. Verfahren nach Anspruch 8,
**dadurch gekennzeichnet,**
- **dass** die Skalierungskonstante der maximalen Kapazität der Warteschlange (FIFO) oder der Summe über die Werte der quantitativen Eigenschaft (nᵢ) aller Datenpaketgruppen der Warteschlange, die über die Information (i) unterscheidbar sind, gleich ist.

10. Verfahren nach einem der vorhergehenden Ansprüche,
**dadurch gekennzeichnet,**
- **dass** mehrere Warteschlagen (FIFO) gegeben sind, bei denen das Verfahren zur Anwendung kommt und
- **dass** ein Zufallsgenerator (Z) zentral für alle Warteschlangen (FIFO) verwendet wird.

11. Verfahren nach einem der vorhergehenden Ansprüche,
**dadurch gekennzeichnet,**
- **dass** mehrere Warteschlagen (FIFO) gegeben sind, bei denen das Verfahren zur Anwendung kommt und
- **dass** eine Tabelle (T) für alle Warteschlangen (FIFO) geführt wird.

12. Verfahren nach einem der vorhergehenden Ansprüche,
**dadurch gekennzeichnet,**
- **dass** in einer Tabelle (T) der Wert der quantitativen Eigenschaft (nᵢ) der Datenpakete (DP) innerhalb der Warteschlange (FIFO), die dieselbe Information (i) umfassen, festgehalten wird,
- **dass** Tabelleneinträge zur quantitativen Eigenschaft (nᵢ) gelöscht werden, wenn das letzte Datenpakete (DP) in der Warteschlange mit der zugehörigen Information (i) die Warteschlange verlässt.

13. Verfahren nach einem der vorhergehenden Ansprüche,
**dadurch gekennzeichnet,**
- **dass** in einer Tabelle (T) der Wert der quantitativen Eigenschaft (nᵢ) der Datenpakete (DP) innerhalb der Warteschlange (FIFO), die dieselbe Information (i) umfassen, festgehalten wird, und
- **dass** Tabelleneinträge zur quantitativen Eigenschaft (nᵢ) nach Ablauf einer Zeitspanne gelöscht werden, wenn keine Datenpakete (DP) mehr in der Warteschlange sind, die die zugehörige Information (i) umfassen, wobei nach Verlassen des letzten Datenpaketes (DP) mit der Eigenschaft (i) ein Timer gestartet wird, und der Eintrag nach Ablauf des Timers gelöscht wird, wenn während der Laufzeit des Timers kein neues Datenpaket mit der Eigenschaft (i) in der Warteschlange aufgenommen wurde.

14. Verfahren nach einem der vorhergehenden Ansprüche,
**dadurch gekennzeichnet,**
- **dass** in einer Tabelle (T) der Wert der quantitativen Eigenschaft (nᵢ) der Datenpakete (DP) innerhalb der Warteschlange (FIFO), die dieselbe Information (i) umfassen, festgehalten wird,
- die Tabelle zyklisch auf Einträge abgefragt wird, zu denen keine Datenpakete (DP) mehr in der Warteschlange vorhanden sind, und
- Tabelleneinträge zu quantitativen Eigenschaft (nᵢ) gelöscht werden, wenn keine Datenpakete (DP) mehr in der Warteschlange sind, die die zugehörige Information (i) umfassen.

15. Verfahren nach einem der vorhergehenden Ansprüche,
**dadurch gekennzeichnet,**
- **dass** durch die Information (i) die Verbindung des Datenpakets festgelegt wird, und
- **dass** durch eine Wahl der Wahrscheinlichkeit bzw. Funktion zur Bestimmung der Wahrscheinlichkeit, mit der das Datenpaket (DP) in die Warteschlange eingereiht wird, eine Priorisierung der Verbindungen vorgenommen wird.
